# EUROPEAN PATENT APPLICATION

(11) **EP 1 198 109 A1**
(43) Date of publication of application: **17.04.2002**
(21) Application number: 00122462.5
(22) Date of filing: 13.10.2000
(51) Int. Cl.: H04M 1/03, H04R 1/22

(54) **Capped earpiece for a mobile phone**

(71) Applicant: Sony International (Europe) GmbH, 10785 Berlin (DE)
(72) Inventor: Lechner, Thomas, Sony International (Europe) GmbH, 85609 Aschheim (DE); Schweikle, Andreas, Sony Int.(Europe) GmbH, 85609 Aschheim (DE)
(74) Representative: Körber, Martin, Dipl.-Phys.

(57) **Abstract**

The invention provides a special acoustic construction to guarantee a good sound quality in volume and frequency distribution for earpieces with an earpiece cap (102). A mobile telephone (100) is introduced, comprising a casing shell (101) and an electrodynamical transducer (103) for generating acoustic signals mounted inside the casing shell (101), whereby the casing shell (101) comprises at least one acoustic connection (106) for leading acoustic signals from the electrodynamic transducer (103) to the outside of the casing shell, characterised by an earpiece cap (102) covering at least one acoustic connection on the outside of and forming a cavity with the casing shell, whereby acoustic signals are guided from the at least one acoustic connection through at least one opening in the earpiece cap to the outside of the earpiece cap.

## Description

The invention relates in general to mobile phones held in contact to a users ear, in particular to mobile phones with an earpiece cap.

Earpieces integrated in mobile telephones generally have to be constructed such, that the sound quality characterised by its volume and frequency distribution is in a wide range independent of the ear-telephone contact. Especially in the frequency range below 1 kHz the sound quality strongly depends on the acoustical load determined by the volume which has to be irradiated acoustically. For an auricle in close contact with the telephone's earpiece the acoustical load is very high, while for an auricle loosely pressed against the earpiece, some leaks will reduce the level of the acoustical load. Some network operators offer special services and users often find it more convenient to navigate the system through the use of the keypad while watching the display and listening to messages from the loudspeaker of the earpiece instead of continuously moving the mobile phone to and from the ear for navigating. Further, the design of a mobile phones earpiece is not only determined by technical considerations, but usually has to obey additionally certain design requirements set by marketing considerations.

The general trend of packing more and more functionality into continuously minimised casings limits the space available for acoustical engineering. The main tendency for improving the audio quality of mobile phone's earpieces is therefore directed to improve the leak tolerance. This is either done by lowering the acoustical impedance or arranging a coupling with the backside of the membrane of the speaker capsule.

The system proposed in EP 0 909 077 A2 provides an acoustic volume at the back of an electrodynamical transducer by arranging an RF-shield casing behind the earpiece. Leak holes in the RF-shield and in the supporting circuit board as well as in the mount of the speaker capsule allow an acoustical return-path between the front and the backside of the speaker membrane.

The system introduced in WO 00/21330 suggests an opening in the casing of the mobile phone, whereby the opening is situated in an area of the casing covered by the concha at a regular usage. The opening offers an acoustical return path from the ear canal via an inner space of the telephone to the backside of the speaker capsule. Additionally a channel is formed which acoustically connects the speaker front to the outside of the mobile telephone which is usually not covered by the ear of the user.

In WO 98/24214 a number of an apertures in the telephone housing are proposed to create an acoustic connection to an interior cavity for the purpose to improve the leak tolerance of the earpiece.

In EP 0 967 772 A1 a channel formed within the casing shell of a mobile telephone connects the ear canal volume with the outside environment when the ear of the user is pressed against the ear piece of the mobile telephone.

To achieve a better audio quality for handsfree situations, WO 97/47117 proposes a communication terminal where the electrodynamic transducer is mounted within an especially designed enclosure comprising a front and a back chamber, each of which is especially adapted for shaping the frequency response of the earpiece. The transducer is mounted in an opening of the wall separating the two chambers. The main acoustic path is formed by openings in the top cover of the upper chamber while the return path is formed by leak openings on the side of the upper enclosure and openings on the rearside of the lower enclosure.

Some mobile phones use earpiece caps wich contrast in colour, shape and material to the casing of the phone. Such earpieces allow a better sensing of the proper position by the auricle. Moreover the earpiece caps might be used as design objects for giving the mobile phone a more pleasing appearance. Unfortunately, attaching an earpiece cap to the earpiece of a mobile telephone causes an increase of the acoustic load and most likely causes acoustical short circuits when applied over an earpiece construction described above.

It is therefore an object of the present invention to provide an earpiece construction where the audio quality is optimised for use with an earpiece cap.

This object is achieved by a mobile telephone comprising a casing shell and an electrodynamic transducer for generating acoustic signals mounted inside said casing shell, whereby said casing shell comprises at least one acoustic connection for leading acoustic signals from the electrodynamic transducer to the outside of the casing shell, characerized by an earpiece cap covering said at least one acoustic connection on the outside of and forming a cavity with said casing shell, whereby acoustic signals are guided from the at least one acoustic connection through at least one opening in the earpiece cap to the outside of the earpiece cap are provided.

The earpiece according to the present invention provides a very simple but effective means for reducing the acoustic impedance of the overall contruction, being robust against changes in the acoustic situation caused from the user's side. Further, the outer shape of the earpiece cap can to a large extend be formed independent of acoustic considerations, thereby allowing the earpiece cap being designed according to further functional or design requirements.

Further advantageous features are claimed in the respective subclaims.

Advantageously, guiding means are provided for guiding the acoustic signals from the at least one acoustic connection to the at least one opening in the earpiece.

The guiding means are advantageously formed by a rib encompassing the acoustic connections shaped to form a duct between the acoustic connections and one or more openings in the earpiece cap, offering an easy way for providing an acoustic path between the casing shell and the earpiece cap. Hereby, the rib advantageously either protrudes from the outside of the casing shell, or from the inside of the earpiece cap, or one part of the rib protrudes from the outside of the casing shell and another part of the rib protrudes from the inside of the earpiece. This allows a manufacturing of the rib with no extra effort necessary in the process of the molding of the casing shell and/or the earpiece cap.

Further, leak openings are formed in the casing shell for guiding sound from the cavity underneath the earpiece cap to the interior of the mobile phone which reduces the acoustic impedance of the earpiece. For reducing the leak tolerance of the overall earpiece construction, a leak channel is formed as a gap between the earpiece cap and the casing shell for guiding sound from the cavity underneath the earpiece cap to the exterior of the mobile phone. Alternatively, a leak channel might be formed advantageously as an acoustic lead-through in the earpiece connected to a gap between the earpiece cap and the casing shell for guiding sound from the cavity underneath the earpiece cap to the exterior of the mobile phone. Advantageously, the leak channel is formed as an optically closed labyrinth to avoid a line of sight between the outside of the mobile phone and the cavity underneath the earpiece cap.

To realise an acoustic return path, openings are provided in the earpiece cap for guiding sound back from the outside of the earpiece cap to the cavity enclosed by it. The cavity enclosed by the electrodynamic transducer and the casing shell further advantageously forms an acoustic filter in combination with the acoustic connections built through the casing shell, so that only minimal space is used up for the realisation of the acoustic characteristics of the earpiece.

Further, the openings in the earpiece are advantageously covered by a dust protection net allowing a protection of the electrodynamic transducer from a pollution with small particles, particularly metallic particles. Further, it is advantageous if the openings in the earpiece cap are much wider than the acoustic connections so that a detuning of the acoustic filter is avoided. For cleaning purposes and for enabling an exchange of earcaps adapted for different applications or being of different design, the earpiece cap is advantageously removably connected to the casing shell.

The earpiece according to the present invention can e. g. be implemented in a mobile telephone, an earphone or a headset for mobile communication devices.

In the following description, the present invention is explained in more detail in relation to the enclosed drawings in which
Fig. 1 shows a vertical cross-section through the earpiece of a mobile telephone according to the present invention,
Fig. 2 shows a horizontal cross-section through the earpiece of a mobile telephone according to the present invention,
Fig. 3 shows a front view of a mobile telephone with an earpiece according to the present invention, and
Fig. 4 shows a top view of a mobile phone with an earpiece according to the present invention, whereby the earpiece cap is removed.

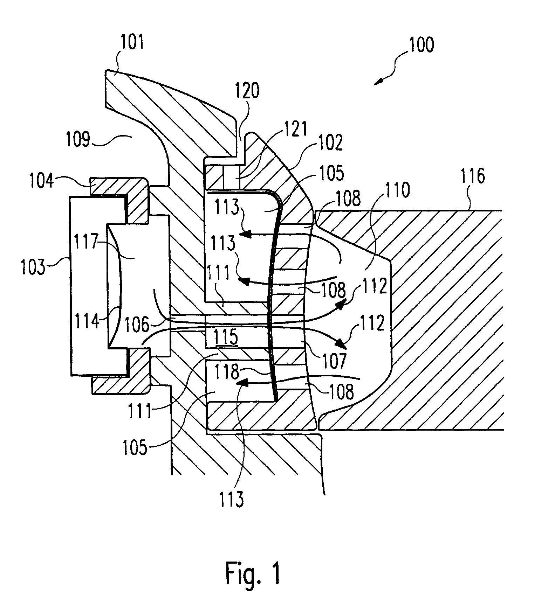

The vertical cross-section in Fig. 1 illustrates the main components of the earpiece according to the present invention. An electrodynamical transducer 103 for generating acoustic signals is clamped into the mounting facility of the front casing shell of a mobile phone. A grommet 104 is used for acoustically sealing the speaker capsule in the mount. The membrane of the speaker faces a casing shell, but it is to be understood that this is not a necessary requirement. The mounted transducer 103 forms together with the casing 101 an enclosure 117 which is designed as one component of an acoustic filter necessary to define the acoustic properties of an earpiece according to the present invention. The second component of the acoustic filter is formed by one or more openings 106 in the casing shell, which constitutes an acoustic connection between the enclosure 117 and the outside of the casing shell. The path 112 from the electrodynamic transducer 103 through the acoustic connections 106 to the ear of the user or the test probe, respectively is defined as the acoustic path. An earpiece cap 102 is fixed in the recession of the casing shell above the speaker. Together with the casing shell 101, the earpiece cap 102 forms a cavity 105 so that the visible part of the earpiece cap is held in a certain distance to the outer surface of the casing shell. Openings 107, 108 in the upper part of the earpiece cap form an acoustical passage between the outside of the earpiece and the enclosed cavity 105. Hereby the cavity adds an additional volume 105 to the volume 110 formed by the auricle and the ear channel of the user when applied properly or, when applied properly, under test conditions, by the measuring instruments, thereby reducing the overall acoustical impedance of the system.

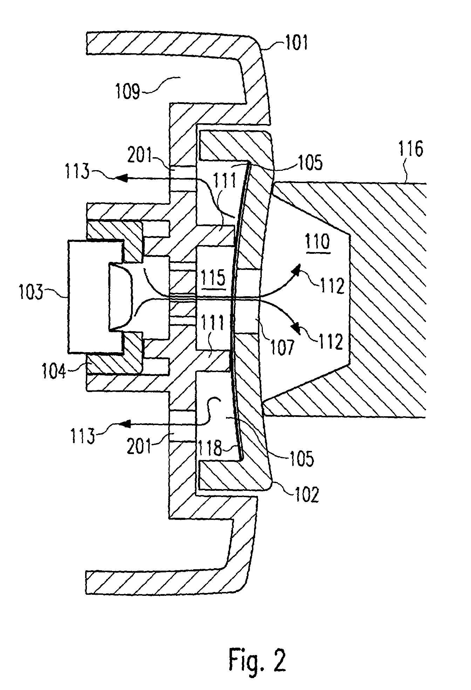

In Fig. 2 a horizontal cross-sectional view of the earpiece according to the present invention is given. Outside the area covered by the speaker capsule in its mount, further openings 201 are provided in the casing shell offering an acoustic passage between the cavity enclosed by the earpiece cap and the casing shell and the interior of the mobile phone 109. These openings 201 open an acoustic passage 113 from the cavity 105 to the interior of the mobile phone and especially to the backside of the speaker capsule. Because the phase relation of the signal emitted from the backside of the electrodynamic transducer is shifted by 180 degrees to that of the signal emitted along the main acoustic path 112 the acoustical linkage of the hearing volume 110 with the inner volume 109 of the mobile phone along the acoustical turn path 113 reduces the acoustic impedance of the earpiece construction.

The acoustic filter of the earpiece is formed by the cavity 117 enclosed by the speaker capsule 103, or more exactly by the speaker membrane 114 and the casing shell combined with the acoustic openings 106 from that cavity through the case shell. The acoustic filter is realised as a low pass filter, whereby the quality in the edge frequency of the filter design are mainly influenced by the dimension of the cavity 117 and the size and shape of the acoustic openings 106. To avoid a mechanic coupling between the capsule of the electrodynamic transducer with the case of the mobile phone, which might lead to resonant frequencies reducing the acoustic quality of the earpiece, a grommet separates the speaker capsule from the mount of the casing. The grommet supresses the mechanical transmission of sound signals produced by the speaker capsule, and acoustically seals the cavity 117 of the acoustic filter.

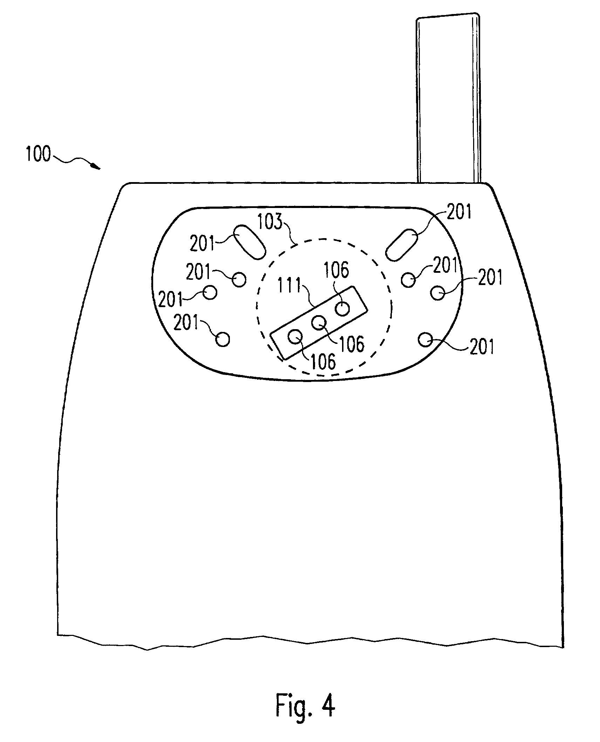

Looking at Fig. 1 and Fig. 2 it can be seen, that sound generated from the speaker capsule follows the acoustic path 112 to a receptive organ or device 116 where a part of the sound is reflected and led back through the openings 108 in the earpiece cap 102 to the cavity 105 enclosed between the earpiece cap and the case of the mobile telephone and further on through the leak openings 201 into the interior of the mobile phone's housing. Unfortunately, this is not the only path for the sound signal to follow, but a part of the signal emitted through the acoustic openings 106 will already be reflected on the inner surface of the earpiece cap and directly led back through the leak openings 201 into the telephone casing. As an analog to electrotechnical terms this can be described as an acoustic short circuit reducing the effectivity of the earpiece design. In other words only a fraction of the sound energy produced by the electrodynamic transducer will reach the ear, while the rest will be absorbed within the casing of the telephone. To optimise the efficiency of the capped ear piece an acoustic duct 115 has to be formed between the acoustical openings 106 and the openings 107 in the earpiece cap destined to emit sound. The duct is formed by a tube-like mechanical construction 111 which encompasses the acoustic openings 106 and separates the volume 115 above the acoustic openings from the rest of the cavity 105 enclosed by the earpiece cap. The tube-like structure 111 connects the acoustic openings with one ore more openings 107 of the earpiece cap so that a direct acoustic passage for sound emission is defined, completely separated from the acoustical return path. This way, the dissipation of the sound energy is minimised. To avoid a disadvantageously detuning of the acoustic filter, the openings 107 for sound emission have to be much wider than the acoustic openings 106. Advantageously, the acoustic duct is constructed as an annular or rectangular shaped rib as shown in Fig. 4 protruding from the surface of the casing shell to the inner surface of the earpiece cap. In an alternative embodiment the rib is realised as an extrusion from the inner side of the earpiece cap with the height of the rib designed such, that the rib will be in contact with the casing when the earpiece cap is fixed on it. In a further alternative embodiment one part of the rib is a constituant of the casing shell, the other part of the rib is a constituant of the earpiece cap and both parts are formed as corresponding fastening elements.

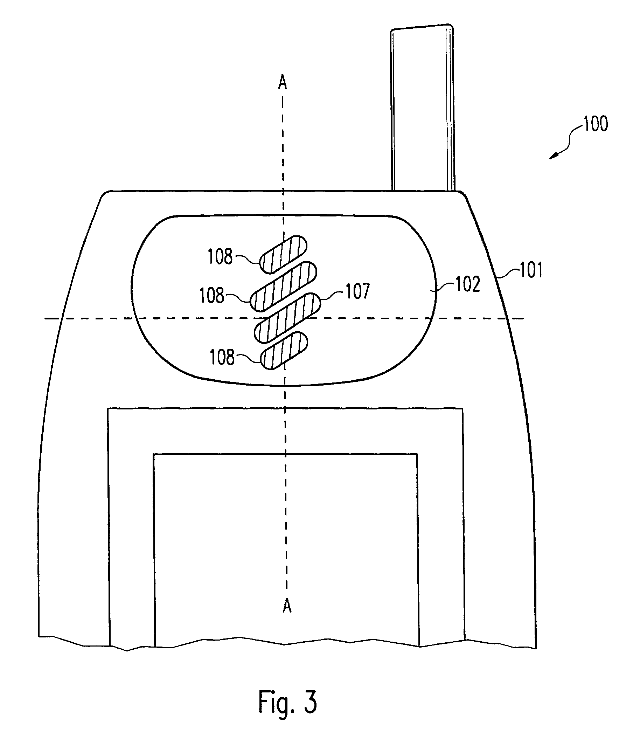

Fig. 3 shows a top view of the earpiece cap according to a special embodiment of the present invention. In this embodiment one slot-like opening 107 is used as the sound emitting opening of the earpiece. Three further openings 108 give a passage for returning the sound from the acoustic volume outside the mobile telephone to acoustic volumes within the telephone construction.

Fig. 4 shows a top view of the earpiece of a mobile telephone according to the present invention with the earpiece cap removed. The acoustic openings 106 to the cavity of the acoustic filter are surrounded by the rib 111 forming the acoustic duct 115 through the cavity 105 underneath the earpiece cap. The position of the electrodynamic transducer capsule mounted on the inner side of the housing is indicated by a dashed circular line.

Outside of that area occupied by the speaker capsule, leak openings 101 link the cavity 105 with the acoustic volume 109 inside the mobile phone. The acoustic return path 113 is now defined leading from the acoustic volume outside the telephone through the openings 108 in the earpiece cap and the cavity 105 the earpiece cap which is separated from the acoustic duct 115 by a rib 111, and further on to the leak openings 201 into the acoustic volume 109 provided within the corpus of the telephone.

In a special embodiment of the present invention, the acoustic leak tolerance is further improved by linking the cavity 105 underneath the earpiece cap with the outside environment. Thereby the opening to the outside environment has to be realised at a position which will not be covered by the ear of the user. Advantageously, this leak opening to the volume outside of the telephone is realised by a gap 120 between the earpiece cap and the case of the telephone. A further advantageous construction of a leak opening to the outside environment is formed by a gap 120 between the casing shell and the earpiece cap not directly accessing the cavity 105 enclosed by the earpiece cap, but being linked to the cavity by one or more opening 121 in the earpiece cap. To prevent a line of sight from the outside into the cavity 105 which also offers a path for the penetration of objects the gap 120 and/or the leak openings 121 will be shaped in the form of a labyrinth, so that the leak opening optically appears to be closed.

The electromagnetic field emitted from the electrodynamic transducer causes the attraction of dust and especially metallic particles even when the telephone is not in use. The particles attracted by the magnetic field intrude through the opening of the earpiece and settle on the sound emitting surface of the electrodynamic transducer. The accumulation of particles will reduce the efficiency of the electrodynamic transducer with time. In the worst case, the speaker will be inactive within the proposed lifecycle of the mobile device. To guarantee the full functionality of the earpiece for a long-time period a dust protection net covers all openings of the earpiece necessary to protect the speaker capsule from intruding particles. Preferably the dust protection net is fastened to an interior surface of the earpiece so that it will not spoil the esthetic design of the telephone. Most preferably, the dust protection net covers the openings of the earpiece cap, because the magnetic field attracting the particles is much weaker at these openings compared to the acoustic openings 106, and because the openings 107 and 108 are much wider than the acoustical openings 106, a detuning of the acoustic filter will be avoided.

For cleaning purposes as well as for the purpose of exchanging earpiece caps of different form and/or different decoration the cap is made removably according to a special embodiment of present invention.

The earpiece cap according to the present invention offers an excellent leak tolerance and a low acoustic impedance whereby the acoustic relevant constructive elements for achieving these properties do not interfere the design requirements set from different considerations different to acoustic engineering.

## Claims

1. A mobile telephone (100) comprising
a casing shell (101) and
an electrodynamic transducer (103) for generating acoustic signals mounted inside said casing shell,
whereby said casing shell comprises at least one acoustic connection (106) for leading acoustic signals from the electrodynamic transducer to the outside of the casing shell
**characterised by**
an earpiece cap (102) covering said at least one acoustic connection (106) on the outside of and forming a cavity (105) with the casing shell, whereby acoustic signals are guided from the at least one acoustic connection through at least one opening (107) in the earpiece cap to the outside of the earpiece cap.

2. A mobile telephone according to claim 1,
**characterised by**
guiding means (111) for guiding acoustic signals from the at least one acoustic connection through the at least one opening (107) in the earpiece cap.

3. A mobile telephone according to claim 1 or 2,
**characterised in,**
**that** said guiding means are formed by a rib (111) encompassing said acoustic connections shaped to form a duct (115) between said acoustic connections (106) and one or more openings (117) in the earpiece cap.

4. A mobile telephone according to claim 3,
**characterised in,**
**that** said rib protrudes from the outside of the casing shell.

5. A mobile telephone according to claim 3,
**characterised in,**
**that** said rib protrudes from the inside of the earpiece cap.

6. A mobile telephone according to claim 3,
**characterised in,**
**that** a first part of said rib protrudes from the outside of the casing shell and a second part of said rib protrudes from the inside of the earpiece cap.

7. A mobile telephone according to one of the claims 1 to 6,
**characterised in,**
**that** leak openings (201) are formed in the casing shell for guiding sound from said cavity (105) enclosed by the earpiece cap to the interior of the mobile phone.

8. A mobile telephone according to one of the claims 1 to 7,
**characterised by**
a leak channel formed as a gap between said earpiece cap and said casing shell for guiding sound from said cavity to the exterior of the mobile phone.

9. A mobile telephone according to one of the claims 1 to 7,
**characterised by**
a leak channel formed as an acoustic leadthrough (112) in the earpiece cap connected to a gap (120) between said earpiece and said casing shell for guiding sound from said cavity to the exterior of the mobile phone.

10. A mobile telephone according to claim 8 or 9,
**characterised by**
said leak channel formed as an optically closed labyrinth.

11. A mobile telephone according to claim 8 or 9,
**characterised by**
openings (108) in the earpiece for guiding sound back from the outside the earpiece cap the said cavity (105) enclosed by it.

12. A mobile telephone according to one of the claims 1 to 11,
**characterised in,**
**that** a cavity (117) enclosed by said electrodynamic transducer (103) and said casing shell (101) forms an acoustic filter in combination with said acoustic connections (106).

13. A mobile telephone according to one of the claims 1 to 12,
**characterised by**
a dust protection net (118) covering said openings (117,118,120,121) in the earpiece cap.

14. A mobile telephone according to one of the claims 1 to 13,
**characterised in,**
**that** said openings (117) in the earpiece cap are much wider than said acoustic connection.

15. A mobile telephone..according to one of the claims 1 to 14,
**characterised in,**
**that** the earpiece cap (102) is removably connected to the casing shell.
